# EUROPÄISCHE PATENTSCHRIFT

(11) **EP 2 576 319 B1**
(45) Veröffentlichungstag und Bekanntmachung des Hinweises auf die Patenterteilung: **25.02.2015**
(21) Anmeldenummer: 11715436.9
(22) Anmeldetag: 14.04.2011
(51) Int. Cl.: G05G 5/06, F16F 1/18, B62D 1/19, B62D 1/184, B62D 1/18

(54) **FEDERKÖRPER**
SPRING ELEMENT
CORPS ÉLASTIQUE

(30) Priorität: 06.08.2010 DE 102010036894; 25.05.2010 DE 102010017080
(43) Veröffentlichungstag der Anmeldung: 10.04.2013
(73) Patentinhaber: ThyssenKrupp Presta Aktiengesellschaft, 9492 Eschen (LI)
(72) Erfinder: SCHNITZER, Rony, FL-9491 Ruggell (LI); BLÄTTLER, Simon, CH-9469 Haag (CH)
(74) Vertreter: Fechner, Thomas
(86) Internationale Anmeldenummer: PCT/EP2011/001894
(87) Internationale Veröffentlichungsnummer: WO 2011/147503

(56) Entgegenhaltungen:
- EP-A2- 1 975 036
- WO-A1-2009/047516
- WO-A1-2009/121386
- WO-A2-2010/000980

## Beschreibung

Die Erfindung betrifft eine Anordnung mit zumindest einem Federkörper, welcher zumindest eine Federzunge zur federnden Belastung eines separat ausgebildeten Arretierteils einer Lenksäule eines Kraftfahrzeugs und zumindest ein Befestigungsteil zur Befestigung des Federkörpers auf einem Bolzen der Lenksäule aufweist, wobei der Federkörper zusätzlich zumindest einen Mitnehmerarm, vorzugsweise zumindest zwei einander gegenüberliegend angeordnete Mitnehmerarme, zur Mitnahme des Arretierteils bei einer Bewegung des Federkörpers aufweist, wobei die Anordnung zumindest ein Arretierteil und zumindest einen Bolzen aufweist und das Arretierteil (3) zumindest einen Anschlagbereich zum Anschlagen des Mitnehmerarms oder der Mit-nehmerarme am Anschlagbereich aufweist.

Federkörper werden beim Stand der Technik z.B. in verstellbaren Lenksäulen dazu verwendet, einen ersten Bauteil der Lenksäule, wie z. B. eine fahrzeugfeste Konsoleneinheit, mit einem zweiten Bauteil der Lenksäule, wie z. B. eine Lenkspindellagereinheit, in der eine Lenkspindel drehbar gelagert ist, miteinander zu verbinden, indem ein an einem der beiden Bauteile befestigtes Arretierteil von der Federzunge des Federkörpers in zumindest einem Betriebszustand in oder an einem, am anderen Bauteil befestigten Eingriffselement arretiert wird. In einem zweiten Betriebszustand der Lenksäule soll diese Arretierung aber gelöst werden, z. B. um die beiden Bauteile der Lenksäule relativ zueinander in eine andere Position zu verstellen. Hierfür muss es möglich sein, das Arretierteil vom Eingriffselement zu lösen. Federkörper, welche hierfür vorgesehen sind, sind z. B. in der WO 2009/121 386 A1 offenbart. Bei dem ersten Ausführungsbeispiel der WO 2009/121 386 A1 ist die Federzunge fix in einer Nut des hakenartig ausgebildeten Arretierteils geführt. Bei einem Verschwenken des Federkörpers wird daher das Arretierteil in allen Richtungen von der Federzunge mitgenommen. In einem zweiten Ausführungsbeispiel der WO 2009/121 386 A1 liegt die Federzunge nur am Arretierteil auf. Bei einer entsprechenden Schwenkbewegung des Bolzens, auf welchem der Federkörper aufsitzt, wird die Federzunge vom Arretierteil abgehoben. Damit das Arretierteil bei einer entsprechenden Drehbewegung des Bolzens vom Eingriffselement gelöst wird, ist in diesem zweiten Ausführungsbeispiel ein Zapfen am Bolzen der Lenksäule vorgesehen, welcher in einem Langloch des Arretierteils geführt ist und das Arretierteil mitnimmt, sobald der Zapfen an einem Ende des Langlochs anschlägt.

Die WO 2009/047516 A1 und die WO 2010/000980 A2 offenbaren Lenksäulen mit Anordnungen aus Federkörper, Arretierteil und Bolzen.

Aufgabe der Erfindung ist es, eine gattungsgemäße Anordnung zu schaffen, welche in ihrem Aufbau einfach ausgestaltet und einfach herstellbar ist.

Dies wird durch einen Federkörper gemäß Patentanspruch 1 erreicht. Die abhängigen Ansprüche offenbaren bevorzugte Ausgestaltungsformen.

Es ist somit vorgesehen, dass der Federkörper zusätzlich zumindest einen Mitnehmerarm, vorzugsweise zumindest zwei einander gegenüberliegend angeordnete Mitnehmerarme, zur Mitnahme des Arretierteils bei einer Bewegung des Federkörpers aufweist. Die Arretierwirkung des Arretierteils wird bevorzugt durch den Eingriff des Arretierteils in ein Eingriffselement bewirkt und kann für verschiedene Zwecke der Lenksäule bestimmt sein. Dabei ist es durch eine Umschaltung oder eine Betätigung möglich, die Arretierwirkung je nach Bedarf ein- und auszuschalten. Die Arretierwirkung wird dabei durch eine Bewegung des Arretierteils zwischen der eingeschalteten und ausgeschalteten Arretierwirkung bewirkt. Insbesondere kann das Arretierteil nach Bedarf die Position einer verstellbaren Lenksäule arretieren und/oder eine Verbindung eines Energieabsorptionsmittels mit einem Teil der Lenksäule ermöglichen. Mit Vorteil ist es zur Verbesserung der Funktion vorgesehen, dass die Bewegung des Arretierteils zumindest in Richtung einer Endposition, bevorzugt in Richtung des eingeschalteten Arretierzustandes, einer federnden Vorspannung ausgesetzt ist. Das Arretierteil ist als separates Bauteil ausgebildet, wodurch eine besonders gut zur Arretierung geeignete Ausbildung ermöglicht ist und die Wahl des Werkstoffs den Erfordernissen angepasst werden kann, während der Federkörper besonders gut zur Erfüllung der Federwirkung und der Mitnahmewirkung ausgebildet sein kann. Unter der Mitnahmewirkung bzw. Mitnahme ist im Sinne der Erfindung eine Übertragung der Bewegung zwischen zwei Körpern, insbesondere dem Federkörper und dem Arretierteil zu verstehen.

Durch die Ausbildung ist es möglich, dass der Federkörper eine Doppelfunktion erfüllt. So kann die Federzunge das Arretierteil in eine Richtung vorspannen bzw. belasten, z. B. um das Arretierteil am Eingriffselement zu arretieren. Der mindestens eine Mitnehmerarme, welcher ebenfalls Teil des Federkörpers ist, kann dazu verwendet werden, bei entsprechendem Bewegen bzw. Verschwenken des Federkörpers das Arretierteil vom Eingriffselement zu lösen. Indem der Federkörper beide Funktionen erfüllt, ergibt sich ein insgesamt sehr einfacher Aufbau. Durch den Einsatz des Federkörpers werden zudem Toleranzunterschiede in den verschiedenen Einzelteilen gut ausgeglichen.

Besonders bevorzugte Ausgestaltungsformen sehen in diesem Sinne vor, dass der Federkörper einstückig, vorzugsweise als umgeformtes Blechteil, ausgeführt ist. Bei der Federzunge kann es sich um eine Blattfeder handeln. Der oder die Mitnehmerarme können ebenfalls federnd ausgebildet sein, um in bevorzugten Ausgestaltungsformen die Montage zu erleichtern. Die Mitnehmerarme können einander gegenüberliegend angeordnet sein, so dass zwischen ihnen das Arretierteil angeordnet werden kann. Weitere bevorzugte Ausgestaltungsformen der Erfindung sehen vor, dass der Federkörper einen von Wänden des Federkörpers teilweise umschlossenen Aufnahmehohlraum zur Aufnahme zumindest eines Teils des Arretierteils aufweist. Das Arretierteil kann dann zumindest teilweise in dem von Wänden des Federkörpers teilweise umschlossenen Aufnahmehohlraum angeordnet werden bzw. sein.

Der Anschlagbereich des Arretierteils kann Teil einer Begrenzung eines Langlochs sein. Die Federzunge und der Mitnehmerarm oder die Federzunge und die Mitnehmerarme können an unterschiedlichen Seiten des Arretierteils an diesem angreifen. Besonders bevorzugte Ausgestaltungsformen der Erfindung sehen vor, dass die Federzunge das Arretierteil in allen Betriebsstellungen federnd belastet. Bei solchen Ausgestaltungsformen ist somit ein permanentes Einwirken der Federzunge auf das Arretierteil vorgesehen. Steht das Arretierteil im Eingriff mit dem Eingriffselement, so drückt die Federzunge das Arretierteil sicher an oder in das Eingriffselement. Liegt das Arretierteil hingegen mit seinem Anschlagbereich an dem oder den Mitnehmerarmen an, so drückt die Federzunge das Arretierteil gegen den Mitnehmerarm oder die Mitnehmerarme. In beiden Fällen ist das Arretierteil mittels Federzunge vorgespannt, so dass es nicht zum ungewünschten Klappern des Arretierteils kommen kann.

Zur Dämpfung von Schwingungen und/oder Geräuschen, kann es vorgesehen sein, den Federkörper vollständig oder an bestimmten Oberflächenbereichen mit einem dämpfenden Überzug ausgebildet darzustellen oder am Federkörper Dämpfer anzuordnen.

Beim Bolzen kann es sich z. B. um einen an sich bekannten Spannbolzen einer Feststelleinrichtung oder Energieabsorptionseinrichtung einer Lenksäule handeln. Günstige Ausgestaltungsformen sehen dabei vor, dass der Federkörper mittels des Befestigungsteils relativ zum Bolzen unverdrehbar, vorzugsweise formschlüssig, am Bolzen befestigt ist. Der Bolzen kann durch eine Bolzenaufnahmeöffnung des Arretierteils hindurchgeführt sein. Im Sinne einer einfachen Montage von Federkörper und Arretierteil auf dem Bolzen sehen bevorzugte Ausgestaltungsformen vor, dass das Befestigungsteil des Federkörpers und/oder die Bolzenaufnahmeöffnung eine nach außen offene Einstecköffnung aufweisen. Mittels der jeweiligen Einstecköffnung können Federkörper und Arretierteil gegebenenfalls gemeinsam in einer Richtung orthogonal zur Bolzenlängsachse auf den Bolzen aufgeschoben, vorzugsweise aufgeschnappt, werden.

Günstigerweise ist die Bolzenaufnahmeöffnung im Arretierteil so ausgestaltet, dass der Bolzen anschlagfrei in der Bolzenaufnahmeöffnung des Arretierteils, vorzugsweise über 360° und mehr, gedreht werden kann. Hierfür kann die Bolzenaufnahmeöffnung, gegebenenfalls abgesehen von der Einstecköffnung, z. B. einen kreisrunden Querschnitt aufweisen. Gemäß der Erfindung ist, wie gesagt, vorgesehen, dass eine Drehbewegung des Bolzens in eine erste Richtung ausschließlich mittels der Federzunge auf das Arretierteil übertragbar ist und eine Drehbewegung des Bolzens in eine der ersten Richtung entgegengesetzte zweite Richtung ausschließlich mittels des Mitnehmerarms oder der Mitnehmerarme auf das Arretierteil übertragbar ist. Dabei muss die Drehbewegung nicht vollständig vom Federkörper auf das Arretierteil übertragen werden. Vielfach ist es bevorzugt, dass bei einer Verdrehung des Bolzens von seiner einen Endlage in seine andere Endlage das Arretierteil erst kurz vor Erreichen der einen Endlage außer Eingriff mit dem Eingriffselement gelangt. Ebenso kann es gewünscht sein, den Eingriff des Arretierteils in das Eingriffsteil erst kurz vor Erreichen der anderen Endlage des Bolzens darzustellen. Weiter ist es denkbar und möglich, dass der Bolzen, beispielsweise in der Ausbildung als Spannbolzen zum Öffnen und Schließen des Fixiersystem einer Lenksäule um einen anderen Winkelbereich verdreht werden muss, als er für die Verdrehung des Arretierteils zwischen der arretierten und der nicht arretierten Stellung erforderlich oder gewünscht ist.

Die Erfindung betrifft auch eine Lenksäule für ein Fahrzeug, welche zumindest einen ersten Bauteil und zumindest einen zweiten Bauteil aufweist, wobei die Bauteile in zumindest einem Betriebszustand der Lenksäule relativ zueinander bewegbar sind und wobei die Bauteile über eine Feststelleinrichtung und/oder eine Energieabsorptionseinrichtung aneinander befestigt oder aneinander befestigbar sind, wobei die Lenksäule dadurch gekennzeichnet ist, dass die Feststelleinrichtung und/oder die Energieabsorptionseinrichtung zumindest eine erfindungsgemäße Anordnung aufweist.

Bei einem dieser Bauteile der Lenksäule kann es sich z. B. um eine Lenkspindellagereinheit handeln, in der die Lenkspindel, an der das Lenkrad befestigt wird, drehbar gelagert ist. Bei dem anderen der Bauteile der Lenksäule kann es sich beispielsweise um eine sogenannte Konsoleneinheit handeln, welche am Fahrzeug selbst fixiert ist bzw. fixiert wird. Lenksäulen mit zwei relativ zueinander bewegbaren, vorzugsweise verschiebbaren Bauteilen sind an sich als verstellbare Lenksäulen in zahlreichen Ausgestaltungsformen beim Stand der Technik bekannt. Durch Verstellen der beiden Bauteile, also z. B. Lenkspindellagereinheit und Konsoleneinheit relativ zueinander kann die Position des Lenkrades an den Fahrer angepasst werden. Eine Feststelleinrichtung der Lenksäule weist dabei zumindest eine Stellung auf, in der die beiden Bauteile zur Verstellung relativ zueinander bewegt werden können. Weiters weist die Feststelleinrichtung zumindest eine zweite Stellung auf, in der die Bauteile form- und/oder reibschlüssig in ihrer Position relativ zueinander fixiert sind. Beim Stand der Technik ist es weiter bekannt, in Lenksäulen sogenannte Energieabsorptionseinrichtungen vorzusehen. Diese dienen dazu, im Crashfall, wenn das Fahrzeug auf ein Hindernis aufprallt, eine Verletzung des Fahrers durch Aufprall des Fahrers auf das Lenkrad möglichst zu vermeiden. Gattungsgemäße, an sich bekannte Energieabsorptionseinrichtungen dienen dabei dazu, dass die beiden genannten Bauteile der Lenksäule unter definierten Bedingungen relativ zueinander verschoben werden können, um die beim Auftreffen des Fahrers auf dem Lenkrad auftretenden Energien in einer für den Fahrer verträglichen Art und Weise zu absorbieren. Die genannten Feststelleinrichtungen und Energieabsorptionseinrichtungen können integriert als eine Einrichtung aber auch als voneinander getrennte Einrichtungen ausgeführt sein. Der erfindungsgemäße Gedanke besteht nunmehr darin, solche Feststelleinrichtungen und/oder Energieabsorptionseinrichtungen einer Lenksäule mit einer erfindungsgemäßen Anordnung auszurüsten.

In der nachfolgenden Figurenbeschreibung werden die beispielhaft ausgesuchten Ausführungsbeispiele beschrieben, woraus sich auch bevorzugte Ausgestaltungsformen und Merkmale der Erfindung ergeben. Es zeigen:
Fig. 1 ein erstes erfindungsgemäßes Ausführungsbeispiel einer Lenksäule für ein Fahrzeug, bei der eine entsprechende Anordnung aus Federkörper, Arretierteil und Bolzen zum Einsatz kommt;
Fig. 2 zeigt eine Detaildarstellung aus Fig. 1 im Bereich der genannten Anordnung aus Federkörper, Arretierteil und Bolzen;
Fig. 3 - 5 zeigen ausgewählte Bauteile dieses ersten Ausführungsbeispiels, losgelöst von dem Rest der Lenksäule;
Fig. 6 zeigt eine Darstellung analog zu den Figuren 3 - 5 mit einer alternativen Ausführungsform für den Federkörper;
Fig. 7 und 8 zeigen teilweise geschnittene Darstellungen zum ersten Ausführungsbeispiel;
Fig. 9 - 11 zeigen Darstellungen zu Teilen eines zweiten erfindungsgemäßen Ausführungsbeispiels;
Fig. 12 zeigt einen Ausschnitt eines dritten erfindungsgemäßen Ausführungsbeispiels;
Fig. 13 und 14 alternative Ausgestaltungsformen eines Arretierteils;
Fig. 14a eine alternative Variante für den Federkörper, wie er beispielsweise für ein Arretierteil gem. Fig. 14 eingesetzt werden kann;
Fig. 15 und 16 das Arretierteil aus Fig. 13 mit darüber angeordnetem Federkörper; Fig. 17 ein weiteres erfindungsgemäßes Ausführungsbeispiel und
Fig. 18 - 21 verschiedene Ausgestaltungsformen von geeigneten Biege- und Reißbiegelaschen;
Fig. 22 und .23 Beispiel für alternative Ausbildungen der Biege- bzw. Reißbiegelasche in Zusammenwirken mit dem Arretierteil und den Federkörper;
Fig. 24 und 25 Beispiel für Form der Aussparung und eines Arretierzahns;
Fig. 26 und 27 Beispiel für einen Federkörper mit Dämpfung.

Gleichartige oder gleichwirkende Elemente werden in den Figuren mit denselben Bezugszeichen bezeichnet.

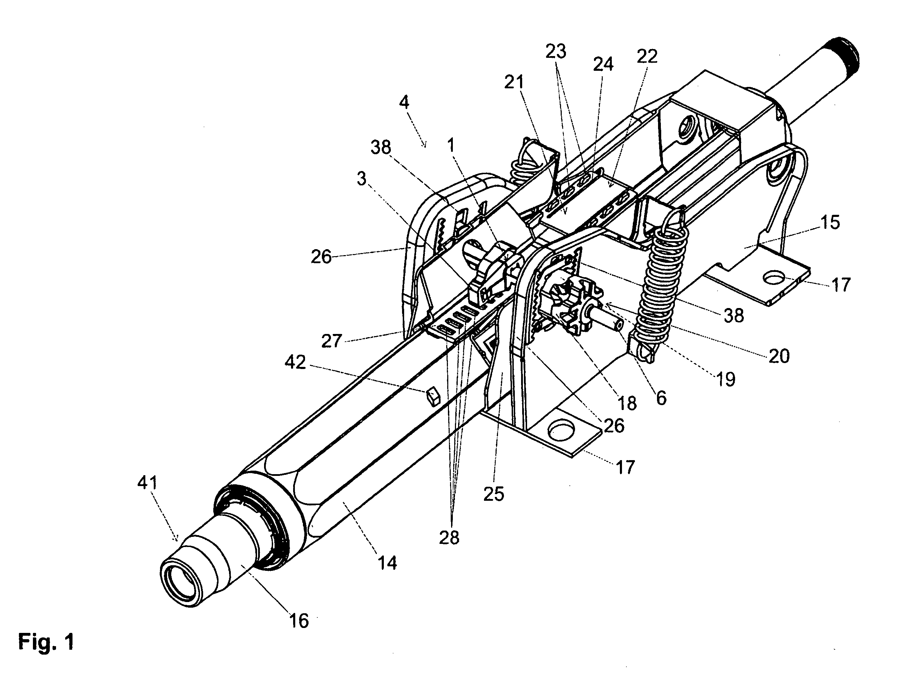

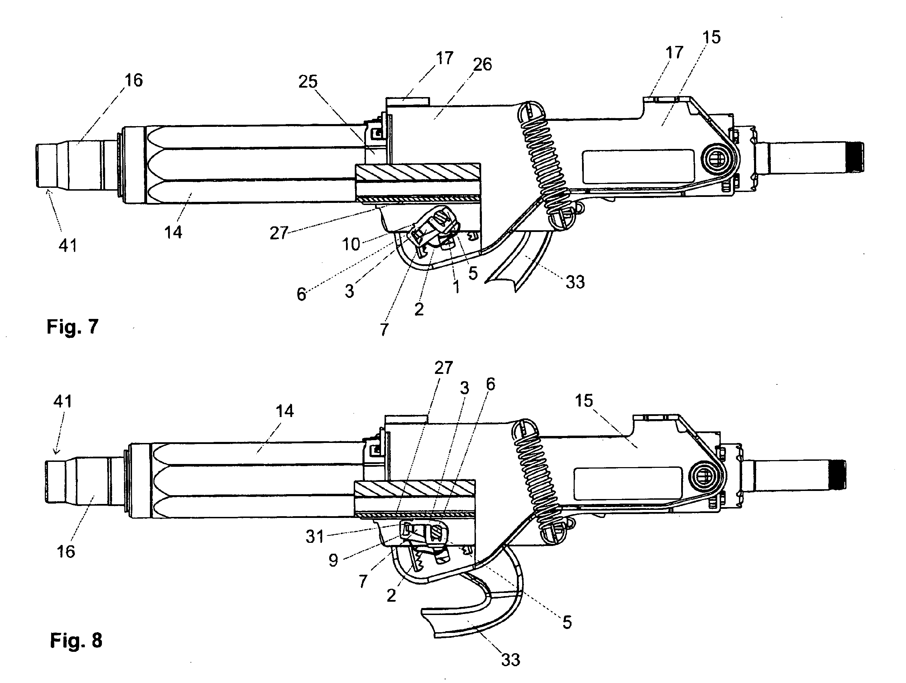

Die in Fig. 1 dargestellte Lenksäule 4 ist mit einer erfindungsgemäß ausgebildeten Anordnung aus Federkörper 1, Arretierteil 3 und Bolzen 6 ausgestattet. Bevor auf diese erfindungswesentlichen Details eingegangen wird, wird aber zunächst der ansonsten an sich bekannte Aufbau der Lenksäule 4 kurz geschildert. Die Lenksäule 4 weist als zweites Bauteil 15 eine Konsoleneinheit auf, welche dazu vorgesehen ist, die Lenksäule 4 am Fahrzeug zu befestigen. Hierzu weist das zweite Bauteil 15 die Befestigungslaschen 17 auf. Das erste Bauteil 14 der gezeigten Lenksäule 4 ist eine Lenkspindellagereinheit, in der die Lenkspindel 16 drehbar gelagert ist. Zwischen dem ersten Bauteil 14 und dem zweiten Bauteil 15 ist in diesem Ausführungsbeispiel, wie an sich bekannt, das Zwischenteil 25 angeordnet. Das als Konsoleneinheit ausgebildete zweite Bauteil 15 weist zwei Seitenwangen 26 auf, zwischen denen die Lenkspindellagereinheit in Form des ersten Bauteils 14 gemeinsam mit dem Zwischenteil 25 in ihrer Position fixiert ist, wenn sich die Feststelleinrichtung 20 in ihrer Schließstellung befindet. In der geöffneten Stellung der Feststelleinrichtung 20 kann die Position des ersten Bauteils 14 in Form der Lenkspindellagereinheit relativ zum zweiten Bauteil 15, also zur Konsoleneinheit verstellt werden. Die Feststelleinrichtung 20 weist, wie an sich bekannt, einen als Spannbolzen ausgebildeten Bolzen 6 auf. Auf diesem befindet sich die Nockenscheibe 18 und die Nockenfolgerscheibe 19. Die Nockenfolgerscheibe 19 ist drehfest an der Seitenwange 26 befestigt. Die Nockenscheibe 18 ist am Bolzen 6 derart fixiert, dass sie mit diesem zwangsweise mitgedreht wird. Durch Verdrehen des Bolzens 6 kann die Feststelleinrichtung 20 in die geöffnete Stellung und auch in die Schließstellung gebracht werden. Dies ist an sich bekannt und muss nicht weiter erläutert werden. Zum Verdrehen des Bolzens 6 um seine Längsachse kann ein Motor oder dergleichen vorgesehen sein. Bei einfachen Ausgestaltungsformen ist zu diesem Zweck am Bolzen 6 der zwar nicht in Fig. 1 aber in den Fig. 7 und 8 dargestellte, von Hand betätigbare Hebel 33 vorgesehen. Befindet sich die Feststelleinrichtung 20 in der geöffneten Stellung, so kann das erste Bauteil 14 relativ zum zweiten Bauteil 15 verschoben werden, wobei der Bolzen 6 in den Langlöchern 38 der Seitenwangen 26 mit verschoben wird. Im gezeigten Ausführungsbeispiel wird mittels der Feststelleinrichtung 20 in deren Schließstellung zur Arretierung der Höhenverstellung ein Formschluss zwischen den an der Seitenwange sichtbaren Verzahnungen hergestellt. Die Längsverstellung wird mittels eines Reib- bzw. Kraftschlusses zwischen den Seitenwangen arretiert. Die Feststelleinrichtung 20 kann aber auch genauso gut ausschließlich reib- bzw. kraftschlüssig oder ausschließlich formschlüssig ausgebildet sein oder Reib- und Formschluss kombinieren. Die Lenksäule kann auch nur in eine Richtung verstellbar sein.

Um im Crashfall die durch Aufschlagen des Fahrers auf ein Lenkrad bzw. die Lenkspindel 16 in die Lenksäule 4 eingetragene Energie gezielt abbauen zu können, weist das vorliegende erste Ausführungsbeispiel zusätzlich zur Feststelleinrichtung 20 auch eine Energieabsorptionseinrichtung 21 auf. Diese sieht im gezeigten Ausführungsbeispiel eine Reißbiegelasche 22 vor, welche an dem ersten Bauteil 14 fixiert ist. Alternativ kann auch eine reine Biegelasche oder eine reine Reißlasche vorgesehen sein. Diese Fixierung kann über unterschiedlichste, beim Stand der Technik bekannte Maßnahmen erreicht werden. In der dargestellten Ausgestaltungsform weist die Reißbiegelasche 22 allerdings Öffnungen 32 auf, durch die die am ersten Bauteil 14 fixierten Haken 23 hindurchgeführt sind. Das Zusammenwirken von Haken 23 und Öffnungen 32 führt zur gewünschten Befestigung der Reißbiegelasche 22 am ersten Bauteil 14. Die Reißbiegelasche 22 weist im gezeigten Ausführungsbeispiel einen Laschenabschnitt 27 auf, in welchem eine Abfolge von Ausnehmungen 28 angeordnet ist. In diese Ausnehmungen 28 kann das Arretierteil 3 mit seinem zumindest einen Arretierzahn 10 eingreifen. Das Arretierteil 3 kann als Klinke, als Haken oder dergleichen ausgebildet sein. Bevorzugt ist das Arretierteil 3, wie dies auch im gezeigten Ausführungsbeispiel realisiert ist, schwenkbar auf dem Bolzen 6 gelagert.

Der Laschenabschnitt 27 mit seinen Ausnehmungen 28 dient im gezeigten Ausführungsbeispiel als Eingriffselement, in das das Arretierteil 3 mit seinem Arretierzahn 10 eingreifen kann. Das Eingriffselement bzw. der Laschenabschnitt 27 sind dabei in der geschilderten Art und Weise am ersten Bauteil 14 fixiert. Das Arretierteil 3 ist durch seine Lagerung auf dem Bolzen 6 am zweiten Bauteil, also an der fahrzeugfesten Konsoleneinheit schwenkbar aber ansonsten fixiert. Kommt es nun im Crashfall zu einem Aufschlagen des Fahrers auf das hier nicht dargestellte, am Montagestutzen 41 der Lenkspindel 16 anzubringenden, Lenkrad und damit auf die Lenkspindel 16, so wird letztere gemeinsam mit der Spindellagereinheit in Form des ersten Bauteils 14 in Längsrichtung der Lenkspindel 16 in die Konsoleneinheit in Form des zweiten Bauteils 15 eingeschoben. Bei entsprechendem Energieeintrag kommt es dabei zum Umbiegen und Aufreißen der Reißbiegelasche 22 an den Schwächungen 24, da die Reißbiegelasche 22, wie bereits geschildert, einerseits am ersten Bauteil 14 und über das Arretierteil 3 andererseits aber auch am zweiten Bauteil 15 befestigt ist.

Hierbei kann ein Anschlag 42 vorgesehen sein, der die Verstellung in der Längsachse begrenzt und nach Überschreiten einer vordefinierten Kraft wegbricht und damit die weitere Verschiebung während der die Energieabsorption über die Reißbiegelasche 22 erfolgt, freigibt.

Betreffend der Ausgestaltung der Reißbiegelasche 22 ist festzustellen, dass durch eine Ausbildung der Lasche, bei der die Lasche entlang der Schwächung 24 aufgetrennt ist, in einfacher Weise, bei sonst gleicher Gestaltung, die Reißbiegelasche 22 in eine reine Biegelasche 22a überführt ist. Günstig ist jedenfalls, dass ein Verbindungsbereich zwischen dem Laschenabschnitt und dem Haltebereich, in dem die Öffnungen 32 für die Aufnahme der Haken 23 bestehen bleibt.

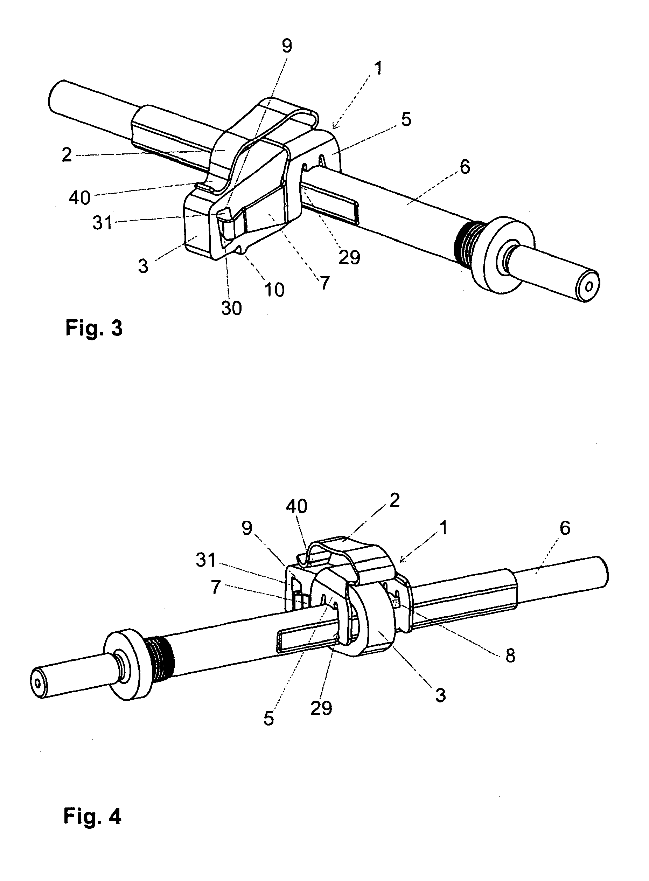

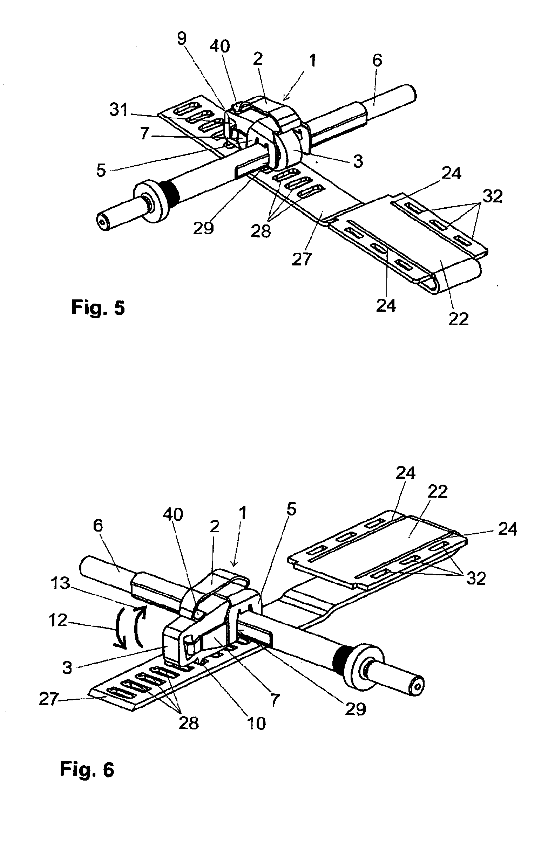

Der Grundaufbau ist an sich z. B. aus der WO 2009/121 386 A1 bekannt und kann in unter-schiedlichsten Ausgestaltungsformen ausgebildet sein. Bezüglich der erfindungsgemäß ausgebildeten Anordnung aus Federkörper 1, Arretierteil 3 und Bolzen 6 des ersten Ausführungsbeispiels wird nun auf die Fig. 3 bis 6 verwiesen. Hier ist diese Anordnung besser zu erkennen, da in den Fig. 3 und 4 keine sonstigen Bauteile der Lenksäule 1 und in den Fig. 5 und 6 zusätzlich nur die Reißbiegelasche 22 dargestellt ist. Der Federkörper 1 weist den Befestigungsteil 5, die Federzunge 2 und zusätzlich im gezeigten Ausführungsbeispiel zwei Mitnehmerarme 7 auf. Im Bereich des Befestigungsteils 5 ist zwischen Wänden des Federkörpers 1 bzw. Befestigungsteils 5 ein Aufnahmehohlraum 8 gebildet, in dem ein Teil des Arretierteils 3 im zusammengebauten Zustand gem. der Figuren angeordnet ist. Die Federzunge 2 weist günstigerweise, wie im hier gezeigten Ausführungsbeispiel auch realisiert, einen gerundeten Andrückabschnitt 40 auf. Dieser sorgt in jeder Stellung für einen optimalen Krafteintrag von der Federzunge 2 in das Arretierteil 3. Das Befestigungsteil 5 des Federkörpers 1 weist Ausnehmungen auf, welche so ausgebildet sind, dass nach Aufsetzen des Befestigungsteils 5 auf den Bolzen 6 dieser über die Formschlüsse 29 unverdrehbar am Bolzen 6 gehalten ist. Dies bedeutet, dass jede Drehbewegung des Bolzens 6 um seine Längsachse zwangsweise vom Federkörper 1 mitgemacht wird. Der Formschluss 29 ist günstigerweise so ausgebildet, dass der Federkörper1 auf den Bolzen 6 aus einer Richtung orthogonal zur Längsrichtung des Bolzens 6 aufsteckbar ist. Hierzu weist das Befestigungsteil 5 zum einen die Einstecköffnung 35 auf. Zum anderen sind die den Formschluss seitens des Befestigungsteils 5 bildenden Wände des Federkörpers 1 günstigerweise parallel oder u- oder v-förmig auseinanderlaufend ausgebildet. Natürlich kann ein entsprechender Formschluss auch durch andere Ausgestaltungsformen realisiert sein. Die Federzunge 2, welche im gezeigten Ausführungsbeispiel als Blattfeder ausgebildet ist, drückt günstigerweise permanent auf das Arretierteil 3. In der in den Fig. 5 und 6 sowie 8 gezeigten Stellung führt dies dazu, dass der Arretierzahn 10 des Arretierteils 3 gegen das Eingriffselement bzw. den Laschenabschnitt 27 gedrückt wird. Sind die Reißbiegelasche 22 und der Arretierzahn 10 entsprechend zueinander ausgerichtet, so führt dies dazu, dass der Arretierzahn 10 in eine der Ausnehmungen 28 gedrückt wird. Es kann aber auch vorkommen, dass der Arretierzahn 10 auf einem Zwischensteg zwischen zwei benachbarten Ausnehmungen 28 zu liegen kommt. Ist dies der Fall, so rutscht der Arretierzahn 10 im Crashfall zunächst über diesen Zwischensteg und rastet dann aufgrund seiner Federbelastung mittels der Federzunge 2 in die nächste Ausnehmung 28 ein. In beiden Fällen kommt es letztendlich zu einer Arretierung des Laschenabschnitts 27 über das Arretierteil 3 am Bolzen 6 und damit am zweiten Bauteil 15. Soll nun eine Verstellung der beiden Bauteile 14 und 15 vorgenommen werden, so wird im ersten Ausführungsbeispiel der von Hand zu betätigende Hebel 33 in die Stellung gemäß Fig. 7 geschwenkt. Hierdurch kommt die Feststelleinrichtung 20 in die geöffnete Stellung. Bei dieser Schwenk- bzw. Drehbewegung des Bolzens 6 um seine Längsachse nimmt dieser über den Formschluss 29 auch den Federkörper 1 mit. Ab einem gewissen Schwenkwinkel kommt es dabei zum Anschlagen der Mitnehmerarme 7 am Anschlagbereich 9 des Arretierteils 3, womit der Arretierzahn 10 vom Laschenabschnitt 27 abgehoben wird. Bei bevorzugten Ausgestaltungsformen ist auch in dieser Stellung gem. Fig. 7 immer noch vorgesehen, dass die Federzunge 2 das Arretierteil 3 federnd belastet und gegen die Mitnehmerarme 7 drückt. Dies verhindert, dass es zu einem Klappern des Arretierteils 3 auf dem Bolzen 6 kommen kann. Im ersten Ausführungsbeispiel ist der Anschlagbereich 9 als eine Begrenzung eines Langlochs 31 im Arretierteil 3 ausgebildet. Dies muss aber nicht so sein, wie die nachfolgenden Ausführungsbeispiele zeigen.

Der Vollständigkeit halber wird darauf hingewiesen, dass an Arretierteil 3 und Eingriffselement an Stelle des Arretierzahns 10 und der Ausnehmungen 28 auch andere Vorsprünge, Bauteile oder sonstige Elemente angeordnet sein können, mit welchen das Arretierteil 3 und das Eingriffselement, hier der Laschenabschnitt 27, in Eingriff miteinander kommen.

Im ersten Ausführungsbeispiel ist, wie in Fig. 4 zu sehen, die Bolzenaufnahmeöffnung 11 im Arretierteil 3 als vollständig kreisrundes Loch ausgebildet. Dies hat zum einen zur Folge, dass das Arretierteil 3, wenn kein Federkörper 1 aufgesetzt ist, frei über mehr als 360° auf dem Bolzen 6 gedreht werden kann. Zum anderen hat dies zur Folge, dass das Arretierteil 3 dieses ersten Ausführungsbeispiels in Längsrichtung des Bolzens 6 auf diesen aufgeschoben werden muss. Die Montage des Federkörpers 1 kann dann durch Aufstecken aus einer Richtung orthogonal zur Längsrichtung des Bolzens 6 erfolgen. Hierzu sind günstigerweise die Mitnehmerarme 7 federnd ausgebildet, so dass sie beim Aufstecken auf das Arretierteil 3 mit ihren hakenförmigen Fortsätzen 30 zunächst auseinander gebogen werden und anschließend daran in das Langloch 31 im Arretierteil 3 federnd einschnappen. Alternativ wäre es natürlich auch möglich, die Mitnehmerarme 7 zunächst entsprechend weit auseinander zu biegen und dann so aufeinander zuzubiegen, dass sie bzw. ihre hakenförmigen Fortsätze 30 in das Langloch 31 eingreifen.

Durch die geschilderte Ausgestaltung von Federkörper 1 und Arretierteil 3 ist jedenfalls im ersten wie auch in den anderen Ausführungsbeispielen sichergestellt, dass eine Drehbewegung des Bolzens 6 in eine erste Richtung 12 ausschließlich mittels der Federzunge 2 auf das Arretierteil 3 übertragbar ist und eine Drehbewegung des Bolzens 6 in eine der ersten Richtung 12 entgegengesetzte zweite Richtung 13 ausschließlich mittels der Mitnehmerarme 7 auf das Arretierteil 3 übertragbar ist.

In der Figur 6 ist eine alternative Ausführungsform des Federkörpers 3 veranschaulicht bei dem der gerundete Andrückabschnitt 40 der Federzunge 2 in Richtung des Bolzens 6 orientiert ist. Dadurch wird eine Vorspannung in Richtung des Bolzens 6 bewirkt, die zusätzliche Funktionen erfüllen kann.

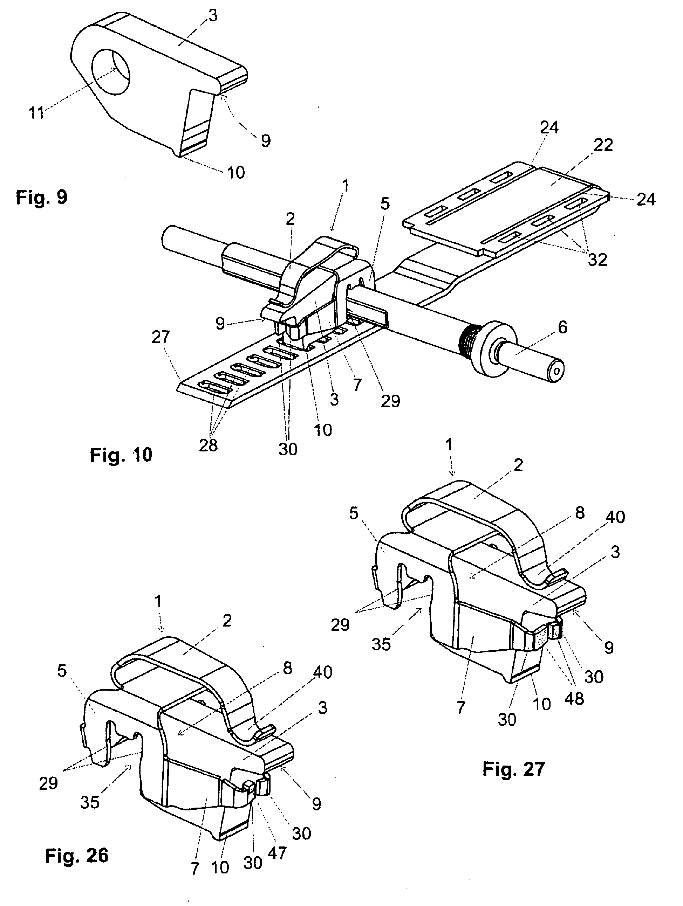

In den Figuren 26 und 27 ist ein Federkörper mit einer Dämpfung veranschaulicht. In Fig. 26 ist am hakenförmigen Fortsatz ein Dämpfer 47 angeordnet, zur Dämpfung des Kontaktes mit dem Anschlagbereich 9 des Arretierteils 3. Der Dämpfer ist bevorzugt aus Gummi oder einem Kunststoff gebildet. In Fig. 27 ist der hakenförmige Bereich mit einer Dämpfungsschicht 48 überzogen, die wiederum bevorzugt aus Kunststoff oder Gummi besteht. Die Dämpfungsschicht 48 kann in einfacher Weise durch Tauchen auf die gewünschten Bereiche des Federkörpers 1 aufgetragen werden. Alternativ kann die Dämpfung auch am Arretierteil 3 im Anschlagbereich 9 oder an einer anderen geeigneten Stelle angeordnet sein.

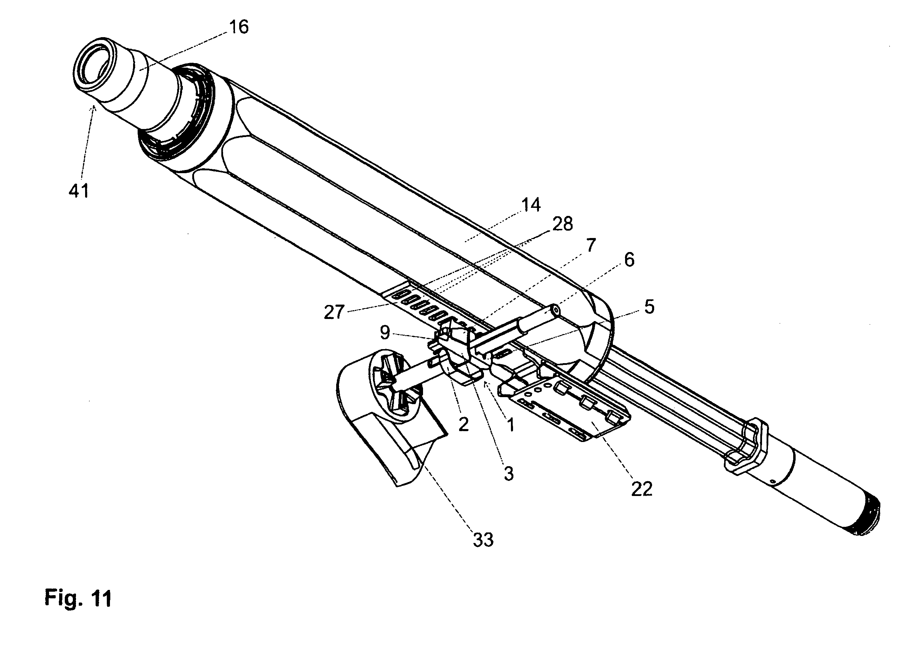

Anhand der Fig. 9 bis 11 wird ein zweites erfindungsgemäßes Ausführungsbeispiel geschildert. Die in diesen Fig. nicht dargestellten Bauteile der Lenksäule 4 können z. B. wie im ersten Ausführungsbeispiel ausgeführt sein. Der wesentliche Unterschied dieses zweiten Ausführungsbeispiels ist in der Ausbildung des Arretierteils 3 zu sehen. Hier weist das Arretierteil 3 kein Langloch 31 sondern nur einen einzigen stegartig vorstehenden Anschlagbereich 9 auf, an welchem die Mitnehmerarme 7 bzw. ihre hakenförmigen Fortsätze 30 anschlagen können, um das Arretierteil 3 vom Laschenabschnitt 27 abzuheben. Der Arretierzahn 10 des Arretierteils 3 ist auch hier wie im ersten Ausführungsbeispiel leistenförmig ausgebildet. Die Längserstreckung der leistenförmigen Ausbildungsform verläuft parallel zur durch die Bolzenaufnahmeöffnung 11 verlaufenden Schwenkachse.

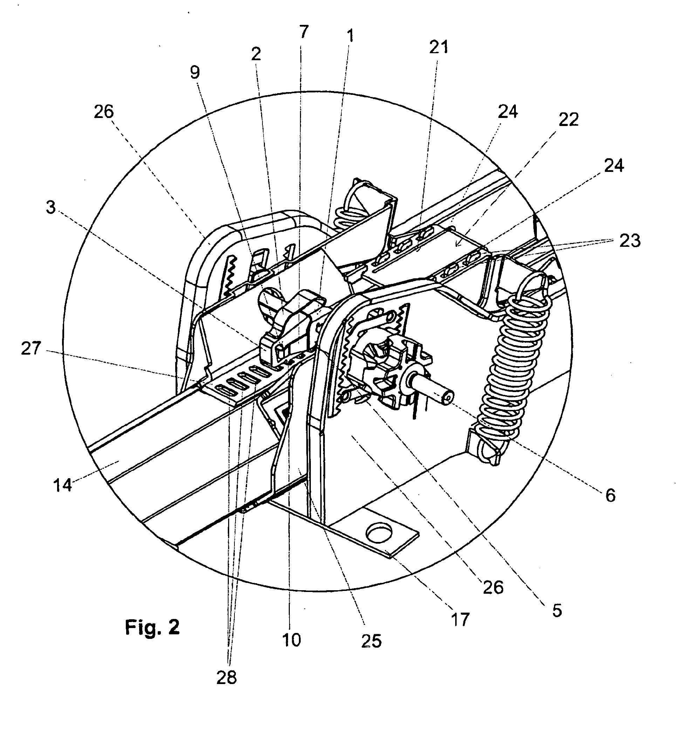

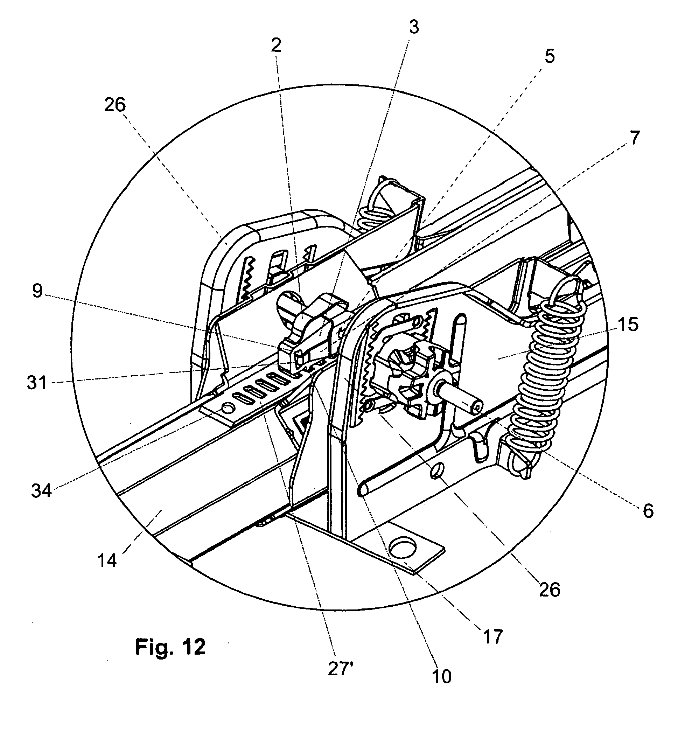

In den ersten Ausführungsbeispielen gemäß der Fig. 1 bis 11 bildet die Anordnung aus Federkörper 1, Arretierteil 3 und Bolzen 6 einen Teil der Energieabsorptionseinrichtung 21. Fig. 12 zeigt eine erfindungsgemäß ausgebildete Lenksäule 4, bei der auf die Energieabsorptionseinrichtung 21 verzichtet wurde. Hier bildet die Anordnung aus Federkörper 1, Arretierteil 3 und Bolzen 6 einen Teil der Feststelleinrichtung 20. Dies wird im gezeigten Ausführungsbeispiel erreicht, indem der Laschenabschnitt 27' fix am ersten Bauteil 14 befestigt wird. Dies kann durch Schweißen oder andere Befestigungsmaßnahmen erreicht werden. Im gezeigten Ausführungsbeispiel erfolgt die Befestigung des Laschenabschnitts 27' unter anderem mittels der Niete 34 am Bauteil 14. Alternativ ist es auch denkbar und möglich, die Aussparungen 28 direkt in das erste Bauteil 14 zu integrieren. Die Aussparungen können auch durch Vorsprünge ersetzt sein, die mit dem Arretierzahn 10 zur Bildung des Formschlusses zusammenwirken. In solchen Ausführungsbeispielen kann das Arretierteil 3 z. B. dazu eingesetzt werden, bei geöffneter Feststelleinrichtung 20 sicher zu stellen, dass das Bauteil 14 zwar orthogonal zu seiner Längsrichtung aber nicht in seiner Längsrichtung relativ zum zweiten Bauteil 15 verstellt werden kann. Dies ist aber natürlich nur ein Beispiel.

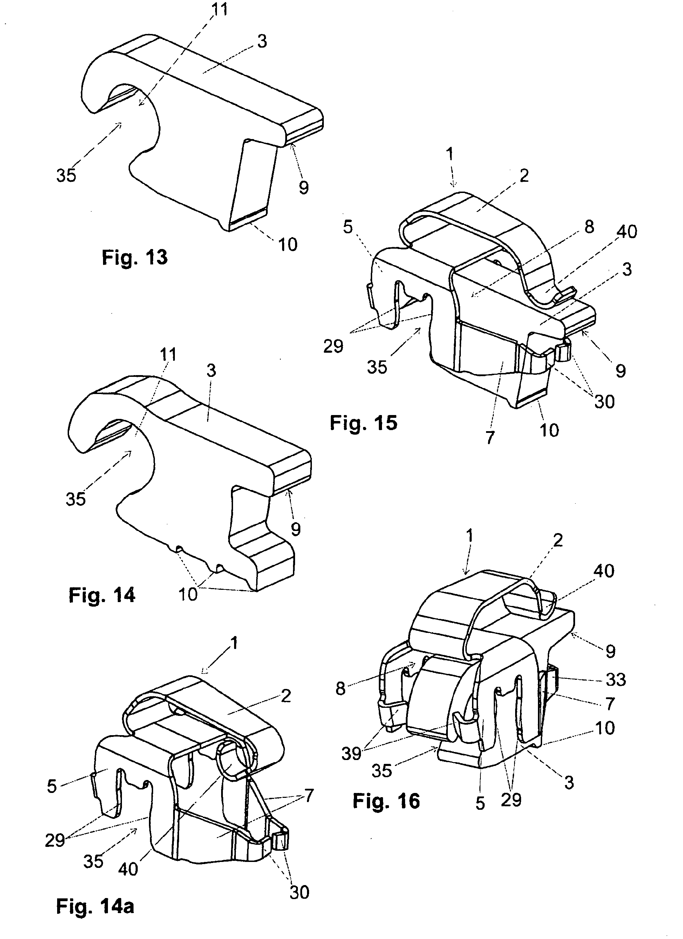

Fig. 13 zeigt ein weiteres Ausführungsbeispiel eines Arretierteils 3. Hier weist die Bolzenaufnahmeöffnung 11 des Arretierteils 3 eine nach außen offene Einstecköffnung 35 auf. Diese erlaubt es, die Anordnung aus Federkörper 1 und Arretierteil 3 gemeinsam aus einer Richtung orthogonal zur Längsachse des Bolzens 6 auf letzteren aufzustecken, womit eine besonders einfache Montage möglich ist. Die Fig. 15 und 16 zeigen eine Anordnung aus dem Federkörper 1 und dem Arretierteil 3 gem. Fig. 13 in Ansichten aus verschiedenen Richtungen. In der Ansicht von hinten gem. Fig. 16 sind die beiden am Federkörper 1 angeordneten Zentrierbacken 39 zu sehen, welche dafür sorgen, dass das Arretierteil 3 sich nicht im Aufnahmehohlraum 8 verkanten kann. Entsprechende Zentrierbacken 39 können in jedem der gezeigten Ausgestaltungsformen eines Federkörpers 1 realisiert sein.

In Fig. 14 ist ein Ausführungsbeispiel eines Arretierteils gezeigt, welches veranschaulicht, dass das Arretierteil zumindest zwei Arretierzähne aufweisen kann, welche von dem Befestigungsteil des Federkörpers unterschiedlich weit entfernt sind und vorzugsweise, wie auch hier realisiert, leistenförmig ausgebildet sind. Im Beispiel gem. Fig. 14 weist das Arretierteil 3 genau drei Arretierzähne 10 auf. Alle drei Arretierzähne 10 sind leistenförmig ausgebildet, wobei die Längserstreckung der leistenförmigen Ausbildungen jeweils parallel zur Schwenkachse verläuft. Durch die Verwendung von mehreren Arretierzähnen 10 wird es möglich, dasselbe Arretierteil 3 für verschieden dicke Laschenabschnitte 27 bzw. Eingriffselemente zu verwenden. Es ist auch möglich mehrere Arretierzähne 10 vorzusehen, um eine Redundanz der formschlüssigen Verbindung darzustellen, wenn z. B. im Crashfall ein Zwischensteg des Laschenabschnitts 27 oder ein Arretierzahn 10 so deformiert wird, dass er nicht mehr hält. Das Ausführungsbeispiel gem. Fig. 14 weist ebenfalls eine Bolzenaufnahmeöffnung 11 mit einer nach außen offenen Einstecköffnung 35 auf, so dass auch dieses Arretierteil 3 aus einer Richtung orthogonal zur Längsachse des Bolzens 6 auf diesen aufgesteckt werden kann.

Fig. 14a zeigt einen insbesondere für das Arretierteil 3 gem. Fig. 14 geeigneten Federkörper 1. Dieser unterscheidet sich in der Ausbildung des gerundeten Andrückabschnitts 40 der Federzunge 2 von dem bisher beschriebenen Federkörper 1. In Fig. 14a ist dieser gerundete Andrückabschnitt 40 in einem, in Richtung hin zum Befestigungsteil 5 abgewinkelten Bereich der Federzunge 2 ausgebildet. Hierdurch ergibt sich eine Kraftkomponente auf das Arretierteil 3, welche das Arretierteil 3 auf den in der Bolzenaufnahmeöffnung 11 angeordneten Bolzen 6 drückt.

Insbesondere durch diese Ausbildung wird es möglich, dass das Arretierteil 3 sich mit seiner Bolzenaufnahmeöffnung 11 gegenüber dem Bolzen 6 verschieben kann, so dass der Bolzen 6 in Richtung der Einstecköffnung 35 verschoben positioniert ist in Bezug zum Arretierteil 3. Die Federzunge 2 mit dem Andrückabschnitt 40 sorgt durch die Vorspannung für einen sicheren Eingriff des bzw. der Arretierzähne in die Ausnehmungen 28. Eine derartige Verschiebung kann sinnvoll sein, um ein "tieferes Eingraben" des oder der Arretierzähne beim Verfahren der Lenkspindel 16 gegenüber der Konsole, dem zweiten Bauteil 15, zu bewirken. Durch das "tiefere Eingraben" oder dem Nachsetzen kann der Formschluss auch bei beginnender Verformung der Ausnehmungen 28 im Laschenabschnitt verbessert oder aufrechterhalten werden. Die Verschiebung kann auch einem Toleranzausgleich dienen und den Einsatz verschieden dicker Laschen 27, bei ansonsten gleichen Bauteilen zu ermöglichen, wie dies für unterschiedliche Fahrzeugausführungen sinnvoll sein kann.

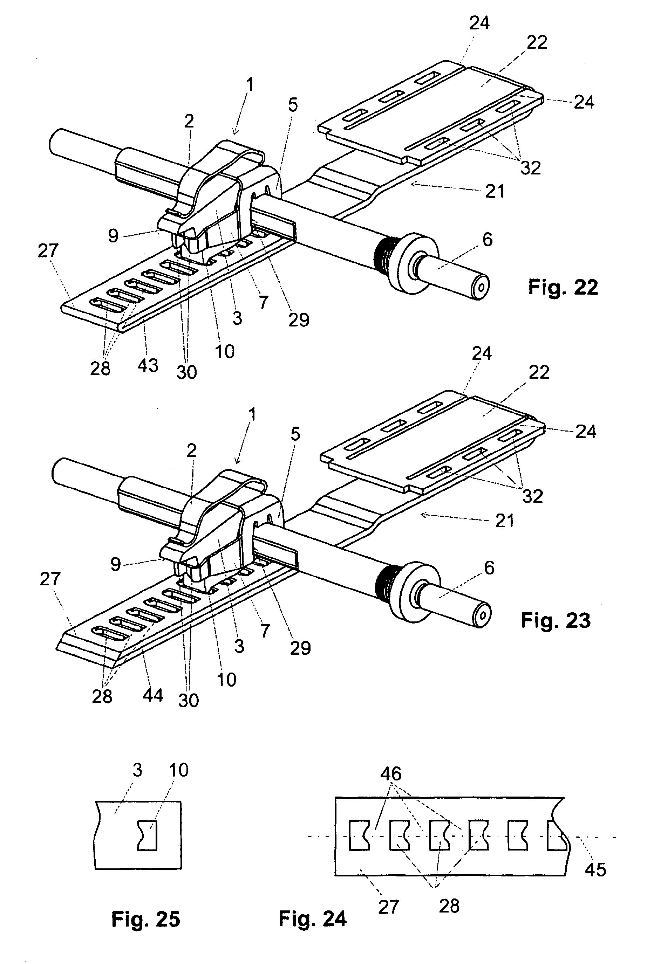

Eine weitere Verbesserung des Formschlusses zwischen dem Arretierteil 3 und dem Eingriffselement kann durch eine verbesserte Ausgestaltung des Bereiches der Energieabsorptionseinrichtung 21, in dem die Ausnehmungen 28 für den Eingriff des Arretierteils 3 angeordnet sind, erreicht werden. Beispiele hierfür sind in den Figuren 22 und 23 veranschaulicht. So ist es denkbar und möglich, die Lasche 27 umzufalzen und dabei als Lasche 43 etwa deckungsgleich zur Lasche 27 zurückzuführen. In diesen Laschenabschnitt 43 sind korrespondierend bzw. etwa deckungsgleich zu den Aussparungen 28 ebenfalls Aussparungen eingebracht. Der eine Arretierzahn 10 oder die mehreren Arretierzähne 10 am Arretierteil 3 sind mit Vorzug länger ausgebildet, um in entsprechende Aussparungen 28 der Lasche 27 und der Lasche 43 eingreifen zu können. Auf diese Weise wird es möglich, die Widerstandskraft gegen die Verformung der Aussparungen zu erhöhen.

Alternativ zur einteiligen Ausführung kann der Laschenabschnitt 27 durch eine zweiten separat ausgebildete Lasche 44 verstärkt werden. Die Lasche 44 ist etwa deckungsgleich zum Laschenabschnitt 27 angeordnet und hat zu den Aussparungen 28 im Laschenabschnitt korrespondierende bzw. etwa deckungsgleich angeordnete Aussparungen. Auch hier sind mit Vorzug Arretierzähne 10 entsprechend verlängert ausgebildet. Die Verbindung zwischen den beiden Laschen 27, 44 kann entweder durch Schweißen, Nieten, Kleben oder auf andere Weise erfolgen. Der Niet kann dabei sogar durch eine der Aussparungen 28 in beiden Laschen 27, 44 geführt werden, um die Verbindung zu bewirken. Der Niet kann aus einem Kunststoff ausgebildet sein.

Weiter ist es denkbar und möglich zur Erhöhung der Widerstandskraft gegen eine Verformung der Aussparungen 28, diese mit einer speziellen Querschnittsform auszubilden. In Fig. 24 ist eine Draufsicht auf den Laschenabschnitt 27 mit den Aussparungen 28 dargestellt. Die Aussparungen 28 weisen eine rechteckige Grundform auf, die im Bereich der Mittelachse 45 des Laschenabschnitts 27 eine bogenförmige Verschmälerung aufweisen. Das heißt eine oder mehrere Ecken des rechteckigen Querschnitts sind nicht durch eine Gerade, sondern durch eine bogenförmige Linie miteinander verbunden, wobei der Abstand der bogenförmigen Linie von der gedachten Gerade zwischen den jeweiligen Ecken zur Mittellinie 45 hin vergrößert ist. Dadurch sind die Stege 46 zwischen den Aussparungen 28 verstärkt und bieten eine größere Widerstandskraft gegen eine Verformung. Es genügt entsprechend nur die Seite der Aussparung zu verstärken (= mit einer entsprechenden Bogenform zu versehen), in deren Richtung die Widerstandskraft gegen eine Verschiebung im arretierten Zustand aufgenommen werden muss. Mit Vorzug ist die Bogenform mathematisch durch eine quadratische Polynom-Funktion darstellbar. Weiter sind mit Vorzug die Aussparungen in den Ecken abgerundet, um eine Kerbwirkung zu verringern.

Weiter ist es denkbar und möglich die Zahnform des einen oder der mehreren Arretierzähne 10 der Form der Aussparung 28 anzupassen. Insbesondere kann der Zahn eine korrespondierend (quasi gleiche) Außenform zur Innenform der Aussparung aufweisen, wie dies in Fig. 25 dargestellt ist.

In allen hier gezeigten Ausführungsbeispielen ist der Federkörper 1 einstückig als umgeformtes Blechteil ausgeführt.

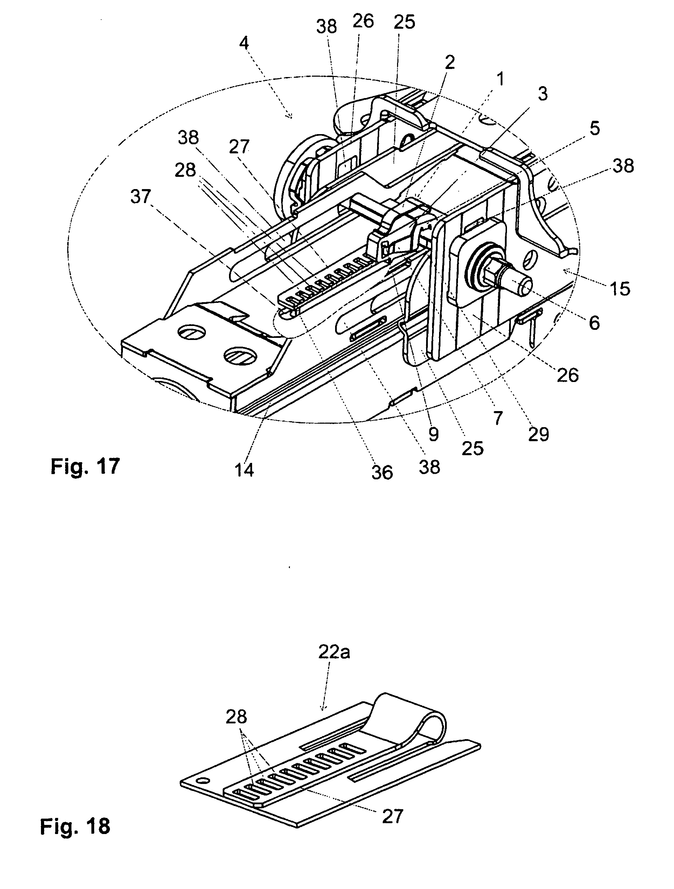

Fig. 17 zeigt einen Ausschnitt einer weiteren erfindungsgemäß ausgebildeten Lenksäule 4. Die Anordnung aus Federkörper 1 und Arretierteil 3 sowie Bolzen 6 entspricht dem ersten Ausführungsbeispiel und muss nicht noch einmal erläutert werden. Das gleiche gilt für zahlreiche weitere Komponenten der Lenksäule 4. Der Unterschied zu den bisher gezeigten Ausführungsbeispielen liegt im Wesentlichen in der Art der Energieabsorption. So ist das Eingriffselement in Form des Laschenabschnitts 27 im Ausführungsbeispiel gem. Fig. 17 nicht Teil einer Reißbiegelasche. Der Laschenabschnitt 27 weist vielmehr einen Verformungsbolzen 36 auf, welcher ein in der Spindellagereinheit bzw. im ersten Bauteil 14 angeordnetes Langloch 37 durchsetzt. Der Spalt zwischen den das Langloch 37 begrenzenden Seitenwänden, in welchen der Verformungsbolzen 36 eingreift, ist so schmal, dass ein z. B. im Crashfall auftretendes Verschieben des Laschenabschnitts 27 gegen den ersten Bauteil 14 bzw. die Lenkspindellagereinheit nur möglich ist, indem der Verformungsbolzen 36 das Langloch 37 aufweitet. Hierdurch wird in der gewünschten Art und Weise im Crashfall Energie absorbiert. Die Form des Langlochs 37 bzw. die Stärke der es begrenzenden Wände können variiert werden, um ein gewünschtes Energieabsorptionsprofil zu erlangen.

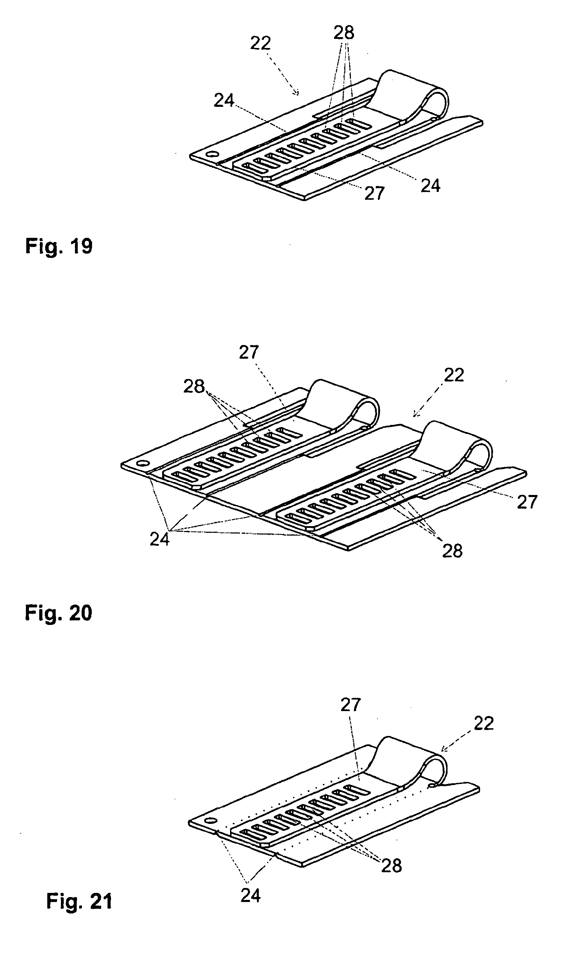

Die Fig. 18 bis 21 zeigen noch verschiedene Ausgestaltungsformen von Biege- oder Reiß-biegelaschen, wie sie alternativ in den bisher gezeigten erfindungsgemäßen Ausführungsformen von Lenksäulen 4 zum Einsatz kommen können. In Fig. 18 handelt es sich um eine reine Biegelasche 22a. In den Fig. 19 und 20 handelt es sich um Reiß-Biegelaschen 22, bei denen die Lasche zunächst nur umgebogen wird, bis anschließend ein Aufreißen entlang der Schwächungen 24 unter gleichzeitigem Umbiegen erfolgt. In Fig. 21 beginnt das Aufreißen der Schwächungen 24 nach einem relativ kurzen Weg des reinen Umbiegens.

In der Fig. 20 ist am Beispiel zweier nebeneinander angeordneter Laschen veranschaulicht, dass es möglich ist, mehrere Laschen, wie Biegelaschen, Reißlaschen und/oder Reißbiegelaschen usw. als Energieabsorptionselement nebeneinander anzuordnen.

**Legende zu den Hinweisziffern:**

| | | | |
|---|---|---|---|
| 1 | Federkörper | 31 | Langloch |
| 2 | Federzunge | 32 | Öffnung |
| 3 | Arretierteil | 33 | Hebel |
| 4 | Lenksäule | 34 | Niete |
| 5 | Befestigungsteil | 35 | Einstecköffnung |
| 6 | Bolzen | 36 | Verformungsbolzen |
| 7 | Mitnehmerarm | 37 | Langloch |
| 8 | Aufnahmehohlraum | 38 | Langloch |
| 9 | Anschlagbereich | 39 | Zentrierbacken |
| 10 | Arretierzahn | 40 | gerundeter Andrückabschnitt |
| 11 | Bolzenaufnahmeöffnung | 41 | Montagestutzen |
| 12 | erste Richtung | 42 | Anschlag |
| 13 | zweite Richtung | 43 | Laschenabschnitt |
| 14 | erster Bauteil | 44 | Streifen |
| 15 | zweiter Bauteil | 45 | Mittellinie |
| 16 | Lenkspindel | 46 | Steg |
| 17 | Befestigungslasche | 47 | Dämpfungselement |
| 18 | Nockenscheibe | 48 | Überzug |
| 19 | Nockenfolgerscheibe | | |
| 20 | Feststelleinrichtung | | |
| 21 | Energieabsorptionseinrichtung | | |
| 22 | Reißbiegelasche | | |
| 22a | Biegelasche | | |
| 23 | Haken | | |
| 24 | Schwächung | | |
| 25 | Zwischenteil | | |
| 26 | Seitenwange | | |
| 27, 27' | Laschenabschnitt | | |
| 28 | Ausnehmung | | |
| 29 | Formschluss | | |
| 30 | hakenförmiger Fortsatz | | |

## Patentansprüche

1. Anordnung mit zumindest einem Federkörper (1), welcher zumindest eine Federzunge (2) zur federnden Belastung eines separat ausgebildeten Arretierteils (3) einer Lenksäule (4) eines Kraftfahrzeugs und zumindest ein Befestigungsteil (5) zur Befestigung des Federkörpers (1) auf einem Bolzen (6) der Lenksäule (4) aufweist, wobei der Federkörper (1) zusätzlich zumindest einen Mitnehmerarm (7), vorzugsweise zumindest zwei einander gegenüberliegend angeordnete Mitnehmerarme (7), zur Mitnahme des Arretierteils (3) bei einer Bewegung des Federkörpers (1) aufweist, wobei die Anordnung zumindest ein Arretierteil (3) und zumindest einen Bolzen (6) aufweist und das Arretierteil (3) zumindest einen Anschlagbereich (9) zum Anschlagen des Mitnehmerarms (7) oder der Mitnehmerarme (7) am Anschlagbereich (9) aufweist, **dadurch gekennzeichnet, dass** eine Drehbewegung des Bolzens (6) in eine erste Richtung (12) ausschließlich mittels der Federzunge (2) auf das Arretierteil (3) übertragbar ist und eine Drehbewegung des Bolzens (6) in eine der ersten Richtung (12) entgegengesetzte zweite Richtung (13) ausschließlich mittels des Mitnehmerarms (7) oder der Mitnehmerarme (7) auf das Arretierteil (3) übertragbar ist.

2. Anordnung nach Anspruch 1, **dadurch gekennzeichnet, dass** der Federkörper (1) einstückig, vorzugsweise als umgeformtes Blechteil, ausgeführt ist.

3. Anordnung nach Anspruch 1 oder 2, **dadurch gekennzeichnet, dass** der Federkörper (1), vorzugsweise im Bereich des Befestigungsteils (5), einen von Wänden des Federkörpers (1) teilweise umschlossenen Aufnahmehohlraum (8) zur Aufnahme zumindest eines Teils des Arretierteils (3) aufweist.

4. Anordnung nach einem oder mehreren der vorangegangenen Ansprüchen, **dadurch gekennzeichnet, dass** die Federzunge (2) und der Mitnehmerarm (7) oder die Federzunge (1) und die Mitnehmerarme (7) an unterschiedlichen Seiten des Arretierteils (3) an diesem angreifen und/oder dass die Federzunge (2) das Arretierteil (3) in allen Betriebsstellungen federnd belastet.

5. Anordnung nach einem oder mehreren der vorangegangenen Ansprüche,
**dadurch gekennzeichnet, dass** das Arretierteil (3) zumindest einen, vorzugsweise leistenförmig ausgebildeten, Arretierzahn (10) aufweist.

6. Anordnung nach einem oder mehreren der vorangegangenen Ansprüche,
**dadurch gekennzeichnet, dass** das Arretierteil (3) zumindest zwei, vorzugsweise genau drei, Arretierzähne (10) aufweist, welche von dem Befestigungsteil (5) des Federkörpers (1) unterschiedlich weit entfernt sind und vorzugsweise leistenförmig ausgebildet sind.

7. Anordnung nach einem oder mehreren der vorangegangenen Ansprüche,
**dadurch gekennzeichnet, dass** der Federkörper (1) mittels des Befestigungsteils (5) relativ zum Bolzen (6) unverdrehbar, vorzugsweise formschlüssig, am Bolzen (6) befestigt ist und/oder der Bolzen (6) durch eine Bolzenaufnahmeöffnung (11) des Arretierteils (3) hindurchgeführt ist.

8. Lenksäule (4) für ein Fahrzeug, welche zumindest einen ersten Bauteil (14) und zumindest einen zweiten Bauteil (15) aufweist, wobei die Bauteile (14, 15) in zumindest einem Betriebszustand der Lenksäule (4) relativ zueinander bewegbar sind und wobei die Bauteile (14, 15) über eine Feststelleinrichtung (20) und/oder eine Energieabsorptionseinrichtung (21) aneinander befestigt oder aneinander befestigbar sind, **dadurch gekennzeichnet, dass** die Feststelleinrichtung (20) und/oder die Energieabsorptionseinrichtung (21) zumindest eine Anordnung nach einem oder mehreren der vorangehenden Ansprüche aufweist.

## Claims

1. Arrangement having at least one spring element (1), which element comprises at least one spring tongue (2) for springloading a separately formed arresting part (3) of a steering column (4) of a motor vehicle and at least one securing part (5) for securing the spring element (1) on a bolt (6) of the steering column (4), wherein the spring element (1) comprises additionally at least one entrainer arm (7), preferably at least two mutually opposingly disposed entrainer arms (7), for entraining the arresting part (3) during a movement of the spring element (1), wherein the arrangement comprises at least one arresting part (3) and at least one bolt (6) and the arresting part (3) comprises at least one stop region (9) for the abutment of the entrainer arm (7) or the entrainer arms (7) on the stop region (9), **characterised in that** a rotational movement of the bolt (6) in a first direction (12) is transmittable exclusively by means of the spring tongue (2) to the arresting part (3) and a rotational movement of the bolt (6) in a second direction (13) opposite to the first direction (12) is transmittable exclusively by means of the entrainer arm (7) or the entrainer arms (7) to the arresting part (3).

2. Arrangement according to Claim 1, **characterised in that** the spring element (1) is implemented in one piece, preferably as a formed metal sheet part.

3. Arrangement according to Claim 1 or 2, **characterised in that** the spring element (1) comprises, preferably in the region of the securing part (5), a receiving cavity (8), partially encompassed by walls of the spring element (1), for the reception of at least a portion of the arresting part (3).

4. Arrangement according to one or more of the preceding claims, **characterised in that** the spring tongue (2) and the entrainer arm (7) or the spring tongue (1) and the entrainer arms (7) engage on the arresting part (3) on different sides of the latter and/or **in that** the spring tongue (2) spring loads the arresting part (3) in all operating positions.

5. Arrangement according to one or more of the preceding claims, **characterised in that** the arresting part (3) comprises at least one arresting tooth (10), preferably formed in the shape of a bar.

6. Arrangement according to one or more of the preceding claims, **characterised in that** the arresting part (3) comprises at least two, preferably exactly three, arresting teeth (10) which are at different distances from the securing part (5) of the spring element (1) and are preferably formed in the shape of a bar.

7. Arrangement according to one or more of the preceding claims, **characterised in that** the spring element (1) is secured on the bolt (6) by means of the securing part (5) non-rotatably, preferably under form closure, relative to the bolt (6) and/or the bolt (6) is guided through a bolt receiving opening (11) of the arresting part (3).

8. Steering column (4) for a vehicle, which column comprises at least one first structural part (14) and at least one second structural part (15), wherein the structural parts (14, 15) are movable relative to one another in at least one operating state of the steering column (4) and wherein the structural parts (14, 15) are secured on one another or securable on one another via a locking device (20) and/or an energy absorption device (21), **characterised in that** the locking device (20) and/or the energy absorption device (21) comprises at least one arrangement according to one or more of the preceding claims.

## Revendications

1. Dispositif avec au moins un corps élastique (1), qui présente au moins une languette élastique (2) pour la sollicitation élastique d'une pièce de blocage (3) formée séparément d'une colonne de direction (4) d'un véhicule automobile et au moins une pièce de fixation (5) pour la fixation du corps élastique (1) sur un pivot (6) de la colonne de direction (4), dans lequel le corps élastique (1) présente en outre au moins un bras d'entraînement (7), de préférence au moins deux bras d'entraînement (7) disposés l'un en face de l'autre, pour l'entraînement de la pièce de blocage (3) lors d'un mouvement du corps élastique (1), dans lequel le dispositif présente au moins une pièce de blocage (3) et au moins un pivot (6) et la pièce de blocage (3) présente au moins une zone de butée (9) pour la butée du bras d'entraînement (7) ou des bras d'entraînement (7) contre la zone de butée (9), **caractérisé en ce qu'**un mouvement de rotation du pivot (6) dans un premier sens (12) peut être transmis à la pièce de blocage (3) exclusivement au moyen de la languette élastique (2) et un mouvement de rotation du pivot (6) dans un deuxième sens (13) opposé au premier sens (12) peut être transmis à la pièce de blocage (3) exclusivement au moyen du bras d'entraînement (7) ou des bras d'entraînement (7).

2. Dispositif selon la revendication 1, **caractérisé en ce que** le corps élastique (1) est réalisé en une seule pièce, de préférence en tant que pièce de tôle déformée.

3. Dispositif selon la revendication 1 ou 2, **caractérisé en ce que** le corps élastique (1) présente, de préférence dans la région de la pièce de fixation (5), une cavité de réception (8) entourée partiellement par des parois du corps élastique (1) pour la réception d'au moins une partie de la pièce de blocage (3).

4. Dispositif selon une ou plusieurs des revendications précédentes, **caractérisé en ce que** la languette élastique (2) et le bras d'entraînement (7) ou la languette élastique (2) et les bras d'entraînement (7) agissent sur la pièce de blocage (3) sur des côtés différents de celle-ci et/ou **en ce que** la languette élastique (2) sollicite élastiquement la pièce de blocage (3) dans toutes les positions de fonctionnement.

5. Dispositif selon une ou plusieurs des revendications précédentes, **caractérisé en ce que** la pièce de blocage (3) présente au moins une dent de blocage (10), de préférence réalisée en forme de baguette.

6. Dispositif selon une ou plusieurs des revendications précédentes, **caractérisé en ce que** la pièce de blocage (3) présente au moins deux, de préférence exactement trois, dents de blocage (10), qui sont différemment écartées de la pièce de fixation (5) du corps élastique (1) et qui sont de préférence réalisées en forme de baguettes.

7. Dispositif selon une ou plusieurs des revendications précédentes, **caractérisé en ce que** le corps élastique (1) est fixé au pivot (6) de façon non rotative par rapport au pivot (6) au moyen de la pièce de fixation (5), de préférence par emboîtement, et/ou le pivot (6) est introduit à travers une ouverture de réception de pivot (11) de la pièce de blocage (3).

8. Colonne de direction (4) pour un véhicule, qui présente au moins un premier élément de construction (14) et au moins un deuxième élément de construction (15), dans laquelle les éléments de construction (14, 15) sont déplaçables l'un par rapport à l'autre dans au moins un état de fonctionnement de la colonne de direction (4) et dans laquelle les éléments de construction (14, 15) sont ou peuvent être fixés l'un à l'autre par un dispositif d'immobilisation (20) et/ou un dispositif d'absorption d'énergie (21), **caractérisée en ce que** le dispositif d'immobilisation (20) et/ou le dispositif d'absorption d'énergie (21) présente au moins un dispositif selon une ou plusieurs des revendications précédentes.
